Europäisches Patentamt

European Patent Office

Office européen des brevets

(11) Publication number: **0 192 494**
**B1**

# EUROPEAN PATENT SPECIFICATION

(45) Date of publication of patent specification: **25.04.90**

(21) Application number: **86301280.3**

(22) Date of filing: **21.02.86**

(51) Int. Cl.⁵: **C 04 B 41/48, C 04 B 41/63, C 04 B 41/83, C 08 F 14/22, C 08 L 27/16**

(54) Process for protecting and consolidating building materials.

(30) Priority: **22.02.85 IT 1963085**

(43) Date of publication of application:
**27.08.86 Bulletin 86/35**

(45) Publication of the grant of the patent:
**25.04.90 Bulletin 90/17**

(84) Designated Contracting States:
**AT BE CH DE FR GB LI NL**

(56) References cited:
**CA-A- 868 425**
**GB-A- 888 765**
**JP-A-52 095 730**
**JP-A-58 090 955**
**JP-A-59 041 257**
**US-A-3 993 827**

The file contains technical information
submitted after the application was filed and
not included in this specification

(73) Proprietor: **AUSIMONT S.r.l.**
**31, Foro Buonaparte**
**I-20100 Milano (IT)**
(73) Proprietor: **CONSIGLIO NAZIONALE DELLE RICERCHE**
**Piazzale Aldo Moro, 7**
**I-00185 Roma (IT)**

(72) Inventor: **Piacenti, Franco**
**79, via Costa S. Giorgio**
**I-50125 Firenze (IT)**
Inventor: **Pasetti, Adolfo**
**2, Piazza Sesia**
**I-20127 Milan (IT)**
Inventor: **Manganelli Del Fa, Carlo**
**6, Via Col di Nava**
**I-58043 Castiglione D. Pescaia Grosseto (IT)**
Inventor: **Moggi, Giovanni**
**14, Via Galilei**
**Milan (IT)**

(74) Representative: **Whalley, Kevin et al**
**MARKS & CLERK 57/60 Lincoln's Inn Fields**
**London WC2A 3LS (GB)**

Courier Press, Leamington Spa, England.

**Description**

This invention relates to a process for consolidating and protecting building materials, which term is intended to include within its scope marble, stone, sandstone, tiles and cement mixes, and articles and structures manufactured therefrom, which are externally exposed to degradation caused by atmospheric and polluting agents.

As is known, the degradation of building materials in particular marble, sandstone and tiles as well as decorative and artistic articles and structures manufactured from such materials is caused by two different kinds of phenomena: chemical phenoma and physical phenoma, both occurring in the presence of water.

A physical phenomenon affecting all building materials is that which is due to the successivce frosting and defrosting of water absorbed by the porosity of the material itself, which results in variation of the specific volume and in tensions which are capable of causing fractures and/or decohesion (loss of cohesion) or in any case detaching of the individual particles constituting the material from one another.

Another physical phenomenon is the dissolution process in water of the limestone contained in marble as an essential component and in stones as a binder, with consequent decohesion of the granules.

Of equal importance in the degradation of building materials and manufactured articles and structures exposed to the atmosphere are chemical phenomena in general: these phenomena essentially consist of aggressive action against the carbonate parts of the materials or of the manufactured article or structure by the polluting agents present in the air (e.g. carbon dioxide, sulphur dioxide, nitrogen oxide); such pollutants react with the material in the presence of water and their concentration is particularly high in rain at the beginning of precipitation.

It is know too that in order to overcome or at least to mitigate the drawbacks described hereinabove it is necessary to considerably reduce both the penetration and the velocity of pentration of the water into the material to be protected.

To achieve this purpose, chemical compounds exerting both a water-repellent and a consolidating action are usually applied onto the outer surface of the material to be protected.

In order to exert the desired action and not to simultaneously give rise to accompanying degradation phenomena or in any case undesirable secondary effects, the consolidating/protective agent must possess the following essential properties:

1) Capability of restoring the cohesion between the particles of the surface layer of the degraded material and the underlying integral part.

2) To give a suitable mechanical resistance to the thus consolidated surface layer.

3) Capability of maintaining, in the consolidated surface layer, characteristics of elasticity in order to prevent — as conversely occurs with other products — the formation of a rigid surface layer with mechanical characteristics different from those of the substrate.

4) Chemical inertia towards the material to be protected/consolidated.

5) Low volatility.

6) Stability to the action of atmospheric agents, to light and to heat.

7) Causing no alteration to the chromaticity of the material.

8) Capability of retaining in the long term its own solubility properties in order to secure the reversibility of the treatment.

As is known, film-forming substances such as glues, essicative oils, resins and polymeric substances are often used to consolidate and protect stone materials. References to the use of such substances can be found in the book by Amoroso and Fassina "Stone Decay and Conservation", Elsewier Ed., Amsterdam, 1983.

Among such substances — none being fully satisfactory for the abovesaid purposes — those most commonly used are: polyethyleneglycols and methylethers thereof, which exhibit, however, a high solubility in water, as a result of which the use thereof must be limited to the protection of manufactured articles and structures not exposed to the external atmosphere; polyvinyl acetate and polyvinyl alcohol, which are affected by the drawback of being sensible to water, in which the former, furthermore, hydrolizes, so releasing acetic acid; polymethylmethacrylate and acrylic resins in general, which however tend to yellowing in the long term amd are not capable of securing complete protection against $SO_2$ present in the atmosphere, while the thermosetting acrylic copolymers, having better characteristics, have the drawback of being irreversible; silicone resins which, however, besides the possibility of releasing methanol, exhibit also the drawback of cross-linking, with consequent formation of a product no longer removable; epoxy resins, which tend to yellowing and, due to their structure of thermosetting resins, make it difficult or impossible to carry out reversible treatments; and polyester resins, which suffer from the drawback of being sensible to water (by the effect of which they tend to saponify), and also to cross-link, as a result of which they lose the reversibility characteristics.

Such products, which are used in the conservation of stone and tile materials, besides not possessing generally, as illustrated hereinabove, characteristics of stability to chemical and physical agressive agents, also drastically reduce the permeability of the treated surface to the air and water vapour. As a consequence, the articles and structures exposed to the outside are affected by extremely strong alteration phenomena underneath the impermeable film, due to the action of condensate water inside the same materials.

2

The use of perfluoropolyethers for the abovesaid purposes, as is described in European Patent Specification No. 59,100, has overcome the problem of the protection; however such compounds, owing to their physical nature as liquids, cannot exert any consolidating action.

The Applicant has now found a method of consolidating and protecting building materials, including marble, stone, sandstone, tiles, and cement mixes, and articles and structures manufactured from such materials, from the degradation caused by the action of polluting and atmospheric agents, which is free from the drawbacks deriving from the use of the materials mentioned above.

The present invention in one aspect provides a process for protecting and consolidating building materials, including marble, stone, sandstone, tiles and cement mixes, and articles and structures manufactured therefrom from the degradation action exerted by atmospheric and/or polluting agents, by applying a protective and consolidating agent onto the surface of such material or manufactured article or structure, characterized in that the protective and consolidating agent is removed by dissolution in a solvent and causes no alteration to the chromaticity of the material, article or structure, and consists of an unvulcanized vinylidene fluoride homopolymer or copolymwer comprising from 55 to 100 mole % of vinylidene fluoride, from 0 to 30 % mole of tetrafluoroethylene and from 0 to 45 mole % of hexafluoropropene, which is applied to the material, article or structure without performing any subsequent treatment.

Preferably the said homopolymer or copolymer is applied as a solution.

The invention in another aspect provides articles and structures manufactured from building materials, including marble, stone, sandstone, tiles and cement mixes, provided with a coat of a protective and consolidating agent which is removable from the article or structure by dissolution in a solvent and causes no alteration to the chromaticity of the article or structure, and consists of an unvulcanized vinylidene fluoride homopolymer or copolymer comprising from 55 to 100 mole % of vinylidene fluoride, from 0 to 45 mole % of hexafluoropropene and from 0 to 30 mole % of tetrafluoroethylene.

The homopolymer of vinylidene fluoride and the copolymers thereof with the monomers mentioned above are well known in the art, having been described, for example, in British Patent No. 888,765 and by Kirk Othmer in "Encyclopedia of Chemical Technology" Vol. 11, page 64, 1980.

Such homopolymers and copolymers can be suitably utilized by applying onto the surface of the material or the manufactured article or structure to be protected a solution of such substances by means of any of the conventional techniques, such as by a brush, a compressed-air gun, by spraying or by immersion.

The fluoropolymer solution can be prepared in a suitable ketonic ester or ether solvent, which permits a suitable penetration of the fluid into the material as a function of the material porosity, and which has a sufficiently low boiling point as to quickly evaporate after the application when prompt removal of the solvent is required. Particularly suitable for such purposes are esters such as methyl acetate or ethyl acetate, ketones such as methylethylketone, or ethers such as tetrahydrofuran or methylisobutylether.

Conversely, when a higher penetration of the solution along with a slower evaporation of the solvent are required, it is possible to use solvents having a higher boiling point, such as for example methylisobutylketone, butyl acetate or amyl acetate or other products having a similar structure.

By using suitable mixtures of solvents having a different volatility, the penetration depth levels of the solution can be varied.

The concentrations of the fluoropolymer solutions to be employed to this end are preferably from 1 to 20% by weight, the solvent being selected from those indicated hereinbefroe or from other solvents having volatilities of the same order of magnitude.

The amount of protective agent to be applied per surface unit of the material to be consolidated and protected depends on the physical characteristics of the surface, such as, for example, porosity and disgregation state of the same material; the higher the porosity and the disgregation state, the higher must be the amount of protective and consolidating solution to be applied.

The amount of protective agent applied is commonly from 20 to 200 g per m$^2$ of surface to be treated.

The invention will be further described with reference to the following illustrative Examples.

## Example 1

From a sandstone block, exposed to the external atmosphere for many years and having the most superficial part affected by a rather high decohesion (loss of cohesion) accompanied by flaking off and sand-forming phenonema of the granules, test pieces of 7 × 7 × 2 cm were obtained.

There were selected two test pieces (A1; A2), which exhibited reciprocally comparable water absorption values as a function of time.

One of the two test pieces (A1) was treated by immersion during 24 hours in a solution of a fluorinated copolymer ("Tecnoflon NML" produced by Montefluos) having the following molar composition: vinylidene fluoride (VDF) = 79%, hexafluoropropene (HFP) = 21%, and having a Mooney viscosity ML 1+4 (100°C) of 65.

The other test piece (A2) was left untreated as a comparison.

The solution of protective/consolidating agent was prepared by dissolving 10 g of such fluoropolymer in 100 ml of amyl acetate.

After evaporation of the solvent from the test piece A1, cehck mesurements were carried out on the test

**EP 0 192 494 B1**

pieces. On their face, at intervals of 5 minutes, the amount of water absorbed in 30 minutes was measured and expressed in cc/cm² of contact surface.

Such measurement was carried out by applying to a face of the test piece an apparatus consisting of a glass cylinder filled with water and connected to a graduated micro-pipette which permits measurement of the water amount absorbed by the contact surface of the test piece. Such apparatus is described in further detail in the document published by the Group Unesco — Rilem PEM with the number 78/182.

The relevant data are indicated hereinbelow, expressed in $cm^3/cm^2$:

|    | 5′   | 10′  | 15′  | 20′  | 25′  | 30′  |
|----|------|------|------|------|------|------|
| A1 | 0.07 | 0.08 | 0.12 | 0.16 | 0.19 | 0.22 |
| A2 | 0.32 | 0.48 | 0.60 | 0.68 | 0.76 | 0.84 |

From a comparison between the data obtained from the two test pieces it is apparent that the consolidating/protective treatment considerably reduces the water amount absorbed by the sandstone material.

Example 2

On test piece A1, before the treatment of Example 1, the permeability to water vapour was determined as follows: the test piece was fixed, by means of a sealing agent, to a plexiglass container, into which 5 cm³ of water had been previously introduced; the whole was weighted and then introduced into a calcium chloride drier.

At predetermined intervals of time, the test piece container assembly was weighed. The tests were conducted at a constant temperature (20°C).

The test was stopped after 168 hours. The same measurement was carried out on the same test piece after the treatment by immersion into the fluorinated copolymer.

The data obtained from the evaporation tests were the following:

before the treatment      2.2 g of evaporated water
after the treatment       1.6 g of evaporated water

This example shows that such treatment permitted a considerable migration of the water vapour.

Example 3

This example illustrates the consolidation power of the protective agent utilized in the process according to the present invention.

Out of 4 test pieces of altered "serena stone" measuring 5 × 5 × 1 cm, two (A, B) were treated by immersion into a solution consisting of the fluoropolymer described in Example 1 at a concentration of 10% by weight in acetone, during 24 hours, while two test pieces (C, D) were left untreated as a comparison.

After evaporation of the solvent (the amount of product absorbed by the materials was 1% by weight), the test pieces so treated, i.e. A and B, were subjected to an abrasion resistance test, performed as follows:

The test pieces were laid, on the side of one of the two faces of greater size, onto an abrasive paper strip (No. 80 produced by FLEXA); after having placed a weight of 2 kg onto the test pieces, the test pieces were drawn on the abrasive paper over a two-meter distance at a constant speed of 1 m/minute.

The measurement is based on the weight loss due to abrasion of the test pieces treated and subjected to the test. Comparison is made of such loss with that obtained with the non-treated test pieces,

The results are shown in the following Table:

| Test Piece | Weight Before The Test | Weight After The Test | Weight Difference |
|------------|------------------------|-----------------------|-------------------|
| A | 39.8971 g | 39.8330 g | 0.0641 g |
| B | 39.8530 g | 39.7968 g | 0.0562 g |
| C | 39.7254 g | 39.5654 g | 0.1600 g |
| D | 39.6354 g | 39.4890 g | 0.1564 g |

From the above it is apparent that the treated test pieces exhibited a higher resistance to abrasion as a consequence of the consolidation effect.

4

**Claims**

1. A process for protecting and consolidating building materials, including marble, stone, sandstone, tiles and cement mixes, and articles and structures manufactured therefrom from the degradation action exerted by atmospheric and/or polluting agents, by applying a protective and consolidating agent onto the surface of such material or manufactured article or structure, characterized in that the protective and consolidating agent is removable from the material, article or structure by dissolution in a solvent and causes no alteration to the chromaticity of the material, article or structure, and consists of an unvulcanized vinylidene flouride homopolymer or coplymer comprising from 55 to 100% mole % of vinylidene fluoride, from 0 to 30% mole of tetrafluoroethylene and from 0 to 45 mole % of hexafluoropropene, which is applied to the material, article or structure without performing any subsequent treatment.

2. A process as claimed in claim 1, characterized in that the said homopolymer or copolymer is applied as a solution.

3. Articles and structures manufactured from building materials, including marble, stone, sandstone, tiles and cement mixes, provided with a coat of a protective and consolidating agent which is removable from the article or structure by dissolution in a solvent and causes no alteration to the chromaticity of the article or structure, and consists of an unvulvanized vinylidene fluoride homopolymer or copolymer comprising from 55 to 100 mol % of vinylidene fluoride, from 0 to 45 mole % of hexafluoropropene and from 0 to 30 mole of tetrafluoroethylene.

**Patentansprüche**

1. Verfahren zum Schutz und Festigen von Baustoffen, einschließlich Marmor, Stein, Sandstein, Ziegeln und Zementmischungen, sowie daraus heregestellten Gegenständen und Bauwerken, vor einer durch atomsphärische und/oder verschmutzende Stoffe bedingten Degradation durch Auftragen eines Schutz- und Verfestigungsmittels auf die Oberfläche eines derartigen Materials oder hergestellten Gegenstandes oder Bauwerks, dadurch gekennzeichnet, daß das Schutz- und Verfestigungsmittel von dem Material, Gegenstand oder Bauwerk durch Auflösungs in einem Lösungsmittel entfernbar ist und keine Veränderung der Farbart des Materials, Gegenstandes oder Bauwerkes hervorruft und aus einem unvulkanisierten Vinylidenfluorid-Homopolymer oder -Copolymer besteht, welches 55 bis 100 Mol-% Vinylidenfluorid, 0 bis 30 Mol-% Tetrafluoroethylen und 0 bis 45 Mol-% Hexafluorpropen umfaßt, welches auf das Material, den Gegenstand oder das Bauwerk aufgebracht wird, ohne eine anschließende Behandlung durchzuführen.

2. Verfahren nach Anspruch 1, dadurch gekennzeichnet, daß das Homopolymer oder Copolymer in Lösung aufgebracht wird.

3. Gegenstände und Bauwerke, welche aus Baustoffen, einschließlich Marmor, Stein, Sandstein, Ziegeln und Zementmischungen, hergestellt sind, und welche mit einer Schicht eines Schutz- und Verfestigungsmittels versehen sind, welches von dem Gegenstand oder dem Bauwerk durch Auflösung in einem Lösungsmittel entfernbar ist und keine Veränderung der Farbart des Gegenstandes oder des Bauwerkes hervorruft und aus einen unvulkanisierten Vinylidenfluorid-Homopolymer oder -Copolymer besteht, welches 55 bis 100 Mol-% Vinylidenfluorid, 0 bis 45 Mol-% Hexafluoropropen und 0 bis 30 Mol-% Tetrafluorethylen umfaßt.

**Revendications**

1. Un procédé de protection et de consolidation de matériaux de construction, y compris marbre, pierre, grès, tuiles et mélanges de ciment, et d'articles et de structure manufacturés à partir de ces matériaux contre l'action de dégradation exercée par des agents atmosphériques et/ou des agents polluants, par application d'un agent de protection et/ou de consolidation sur la surface de ces matériaux ou articles manufacturés ou structures, caractérisé en ce que l'agent de protection et/ou de consolidation peut être éliminé du matériau, article ou structure, par dissolution dans un solvant et n'occasionne aucune altération de la couleur des matériaux, articles ou structures, et qu'il est constitué d'un homopolymère ou copolymère de fluorure de vinylidène non vulcanisé comprenant de 55 à 100 moles % de fluorure de vinylidène, de 0 à 30 moles % de tétrafluoroéthylène et de 0 à 45 moles % d'hexafluoropropène, que l'on applique au matériau, article ou structure sans que cela nécessite un traitement ultérieur.

2. Un procédé selon la revendication 1, caractérisé en ce que cet homopolymère ou copolymère est appliqué sous forme de solution.

3. Articles et structures manufacturés à partir de matériaux de construction, y compris marbre, pierre, grès, tuiles et mélanges de ciment, revêtus d'un agent de protection et/ou de consolidation qui puisse être éliminé de l'article ou de la structure par dissolution dans un solvant et n'occasionne aucune altération de la couleur des articles ou structures et qui est constitué d'un homopolymère ou copolymère de fluorure de vinylidène non vulcanisé comprenant de 55 à 100 moles % de fluorure de vinylidène, de 0 à 45 moles % d'hexafluoropropène et de 0 à 30 moles % de tétrafluoroéthylène.